# EUROPÄISCHE PATENTSCHRIFT

(11) **EP 2 088 664 B1**
(45) Veröffentlichungstag und Bekanntmachung des Hinweises auf die Patenterteilung: **02.04.2014**
(21) Anmeldenummer: 08002302.1
(22) Anmeldetag: 07.02.2008
(51) Int. Cl.: H02K 5/26, H02K 7/08

(54) **Maschine mit Direktantrieb**
Machine with direct drive
Machine dotée d'un engrenage direct

(43) Veröffentlichungstag der Anmeldung: 12.08.2009
(73) Patentinhaber: Siemens Aktiengesellschaft, 80333 München (DE)
(72) Erfinder: Jajtic, Zeljko, Dr., 80992 München (DE); Knorr, Markus, 86157 Augsburg (DE); Matscheko, Gerhard, 82319 Starnberg (DE); Wolter, Wolfgang, 85241 Herbertshausen (DE)

(56) Entgegenhaltungen:
- WO-A-2004/068678
- DE-A1- 2 822 993
- DE-A1-102006 010 198
- DE-U1- 9 306 975

## Beschreibung

Die Erfindung betrifft eine Maschine, in der ein bewegliches Teil vermittels eines Direktantriebs bewegt wird.

Häufig wird der Direktantrieb als so genannter Einbaumotor bereitgestellt. Der Hersteller der Maschine erhält den Ständer und den Läufer (Stator und Rotor) der Maschine, wobei der Läufer noch nicht definiert gegenüber dem Ständer gelagert ist. Vielmehr erfolgt die eigentliche Lagerung des Läufers gegenüber dem Ständer innerhalb der Maschine. Der Ständer wird mit einem ersten anderen Bauteil der Maschine verbunden und der Läufer mit einem zweiten anderen Bauteil der Maschine verbunden, üblicherweise starr verbunden. Nun wird das zweite andere Bauteil der Maschine relativ zu dem ersten anderen Bauteil der Maschine gelagert, und damit erhält man eine indirekte Lagerung des Läufers gegenüber dem Ständer. Wird als Direktantrieb ein elektrischer Motor verwendet, hängt ein gutes Funktionieren des Motors empfindlich davon ab, wie genau ein vorbestimmter Luftspalt zwischen Ständer und Läufer, genauer gesagt zwischen den Wirkbereichen des Ständers und des Läufers, in denen die wirkenden Magnetfelder bereitgestellt sind, eingehalten wird. Die Lagerung der Maschine erweist sich häufig als unzureichend, um den Luftspalt präzise einzustellen. Diese Problematik tritt verstärkt bei großen Maschinen, insbesondere besonders großen Maschinen auf. Wird ein rotatorisch arbeitender Motor verwendet, bei dem der Rotor einen Durchmesser von drei bis fünf Metern haben muss, stellt die Lagerung bei einer Maschine der oben beschriebenen Art eine Herausforderung dar. Hat die Maschine gar einen Durchmesser von 20 bis 50 Metern, wie es bei modernen Teleskopen oder auch Windkraftanlagen der Fall sein kann, erweisen sich bisherige Maschinenbaukonzepte als ungeeignet.

Aus der DE 28 22 993 A1 ist eine elektrische Maschine mit den Merkmalen gemäß Oberbegriff des Patentanspruchs 9 bekannt.

Es ist Aufgabe der Erfindung, das Problem der Lagerung zu entschärfen oder gar zu beseitigen.

Die Aufgabe wird durch eine Maschine mit den Merkmalen gemäß Patentanspruch 1 und durch eine Maschine mit den Merkmalen gemäß Patentanspruch 9 gelöst.

Während bisher die Läufereinheit, also bei einer rotatorischen Maschine der Rotor und bei einem Linearmotor eine Mehrzahl von Läufersegmenten, starr mit dem durch den Direktantrieb zu bewegenden Teil verbunden sind, ist erfindungsgemäß gemäß einem ersten Aspekt der Erfindung die Läufereinheit über eine Koppeleinrichtung mit dem beweglichen Teil gekoppelt, welche, insbesondere durch ihren Aufbau, das verwendete Material und insgesamt ihre Auslegung, eine Relativbewegung des beweglichen Teils zu der Läufereinheit ermöglicht. Der Direktantrieb hingegen weist eine Abstandshaltevorrichtung zum Halten eines Abstands zwischen dem Wirkbereich des Ständers und dem Wirkbereich der Läufereinheit auf. Dadurch, dass darauf verzichtet wird, die Läufereinheit starr mit dem beweglichen Teil zu verbinden, muss das außerhalb des Direktantriebs in der Maschine vorgesehene Lager nicht mehr direkt den Luftspalt zwischen dem Teilkörper der Läufereinheit, an dem der Wirkbereich ausgebildet ist, und dem Teilkörper des Ständers, an dem dessen Wirkbereich ausgebildet ist, sicherstellen. Die Erfindung beruht vielmehr auf der Erkenntnis, dass durch die Magnetfelder die Läufereinheit ohnehin zum Ständer hin gezogen wird. Durch das Ermöglichen der Relativbewegung zwischen Läufereinheit und beweglichem Teil kann sich die Läufereinheit in Folge dieser anziehenden Kraft unabhängig von der für das bewegliche Teil bereitgestellten Lagerung bewegen. Durch die Abstandshaltevorrichtung ist hierbei gewährleistet, dass nun ein genau definierter Luftspalt eingehalten wird: Die Läufereinheit folgt der anziehenden Kraft soweit, bis die Abstandshaltevorrichtung eine weitere Anziehung zwischen Ständer und Läufereinheit unterbindet.

Bei einer einfachen Ausführungsform wird zum Zwecke des Haltens eines Abstands an der Läufereinheit bzw. an einem und vorzugsweise mehreren Segmenten der Läufereinheit zumindest ein Paar Stützrollen angebracht. Die Stützrollen werden an einem Körper der Läufereinheit bzw. des jeweiligen Segments der Läufereinheit drehbar gelagert, an dem sich besagter Wirkbereich befindet. Die Stützrollen können direkt auf dem Ständer entlangrollen. Damit ist der Körper von dem Ständer fest beabstandet.

Die Abstandshaltevorrichtung kann auch ein Schienensystem umfassen. Hierbei wird man an dem Ständer zumindest eine Schiene anbringen. Die Läufereinheit muss in geeigneter Weise an der Schiene entlanglaufen. Hierzu kann in der Läufereinheit bzw. einem Segment der Läufereinheit eine Aussparung vorgesehen sein, bevorzugt ist ein Führungsschuh bereitgestellt, der über die Schiene gleiten kann.

Es ist vorstellbar, dass die Koppeleinrichtung eine Relativbewegung des beweglichen Teils zu der Läufereinheit in beliebigen Richtungen ermöglicht. Bevorzugt wird jedoch eine Relativbewegung in Bewegungsrichtung der Läufereinheit unterbunden, denn sonst könnte es passieren, dass das bewegliche Teil keine definierte Bewegung erfährt. Mit anderen Worten sollte die Koppeleinrichtung dann eine Relativbewegung nur in eine solche Richtung (oder in solche Richtungen) ermöglichen, die von der Bewegungsrichtung der Läufereinheit verschieden sind. Die Relativbewegung ist bei einem Linearmotor also nur in Richtung senkrecht zur Linearbewegung möglich. Bei einer Drehbewegung kann die Relativbewegung ein axialen und einen radialen, nicht aber einen tangentialen Anteil bezogen auf den dann als Rotor ausgebildeten Läufer haben.

Die Ausbildung einer Koppeleinrichtung, welche in flexibler Weise das bewegliche Teil mit der Läufereinheit koppelt, ist mit einfachen Mitteln möglich. So kann die Koppeleinrichtung zumindest ein flaches streifenförmiges (und daher hin- und herbiegbares) Metallelement umfassen. Ein solches Metallelement kann als Lamelle oder als Lamellenstruktur mit einer Vielzahl von Lamellen ausgebildet sein.

Eine gewünschte Relativbewegung, insbesondere nur in von der Bewegungsrichtung der Laufeinheit verschiedene Richtungen, ist auch dann erzielbar, wenn ein Gelenk eingesetzt wird, z.B. ein Kugelgelenk. Es ist möglich, zwei Kugelgelenke über eine Verbindungsstange miteinander zu koppeln, wobei die Verbindungsstange sich in einem Grundzustand parallel zur Bewegungsrichtung eines Linearmotors erstreckt.

Die Erfindung ist bei sämtlichen Maschinen mit einem beweglichen Teil, das mittels eines Direktantriebs angetrieben wird, einsetzbar. Auch wenn der Bedarf für die Erfindung insbesondere bei der Konstruktion besonders großer Maschinen erwuchs, ist die Erfindung auch bei kleineren Maschinen einsetzbar. Bei den genannten Maschinen Teleskop und Windkraftanlage wird der Direktantrieb in der Regel ein rotatorischer Direktantrieb sein. Die Erfindung ist auch anwendbar, wenn der Direktantrieb ein elektrischer Linearmotor ist.

In letzterem Fall erweist sich eine symmetrische Ausführungsform als vorteilhaft, bei der der Ständer ein sich geradlinig erstreckendes Element aufweist und wobei an einander entgegengesetzten Seiten des sich geradlinig erstreckenden Elements Läufereinheiten vorbeifahren (doppelseitige Anordnung). Die Läufereinheiten sollten jeweils mit einem beweglichen Teil gekoppelt sein und die beweglichen Teile starr miteinander verbunden sein. Die Kopplung erfolgt dabei in der oben beschriebenen Art, also mittels einer Koppeleinrichtung, welche eine Relativbewegung des beweglichen Teils der Läufereinheit bei jeder der beiden Läufereinheiten ermöglicht, und jedenfalls ist an beiden der Läufereinheiten auch die Abstandshaltevorrichtung vorgesehen, z.B. die genannten Stützrollen. Dadurch, dass die beweglichen Teile starr miteinander verbunden sind, erfolgt eine Kopplung der beiden Läufereinheiten. Dadurch kann die gesamte Anordnung stabilisiert werden. Zudem können die Beanspruchungen von Bauteilen bei solcher doppelseitigen Anordnung verringert werden, weil sich die auf die beiden Läufereinheiten wirkenden Kräfte gegenseitig ausgleichen. Bei Verwendung der Stützrollen sind beispielsweise die Stützrollen der einzelnen Läufereinheiten jeweils weniger beansprucht als es im Falle einer einseitigen Anordnung mit nur einer einzigen Läufereinheit an einem Ständer ist.

Alternativ zur Kopplung einer Läufereinheit über eine eine Relativbewegung erlaubende Koppeleinrichtung mit dem beweglichen Teil kann auch eine Ständereinheit der Maschine über eine Koppeleinrichtung mit einem unbeweglichen Teil der Maschine gekoppelt sein, wobei die Koppeleinrichtung eine Relativbewegung zwischen Ständereinheit und unbeweglichem Teil ermöglicht. Sämtliches zum ersten Aspekt der Erfindung Gesagte findet auch in einer Maschine gemäß diesem zweiten Aspekt der Erfindung in analoger Weise Anwendung.

Nachfolgend werden bevorzugte Ausführungsformen der Erfindung unter Bezug auf die Zeichnung beschrieben, wobei
- FIG 1: in schematischer Darstellung eine erste Ausführungsform der Erfindung veranschaulicht,
- FIG 2: in schematischer Darstellung eine zweite Ausführungsform der Erfindung veranschaulicht, und
- FIG 3: schematisch die zweite Ausführungsform aus FIG 2 in weiterem Detail veranschaulicht, und
- FIG 4: in schematischer Darstellung eine vierte Ausführungsform der Erfindung veranschaulicht.

Bei nachfolgend beschriebenen Ausführungsformen der Erfindung soll in einer Maschine ein Bauteil mittels eines elektrischen Linearmotors mit Läufer und Ständer bewegt werden. Die Erfindung ist auch auf Maschinen anwendbar, bei denen ein rotatorischer Direktantrieb verwendet wird.

Ein elektrischer Linearmotor weist ein Primärteil und ein Sekundärteil auf. Üblicherweise wird an dem Sekundärteil ein Permanentmagnet bereitgestellt, während an dem Primärteil ein Kern aus ferromagnetischem Material, überlicherweise Eisen, bereitgestellt wird, sowie Spulen, die um den Kern gewickelt sind. Die Spulen werden bestromt, und das von dem Strom erzeugte und durch den Eisenkern verstärkte Magnetfeld wechselwirkt mit dem Magnetfeld des Permanentmagneten des Sekundärteils, und somit wird in Bewegungsrichtung eine Schubkraft zwischen Primär- und Sekundärteil erzeugt.

Prinzipiell können beide Teile eines Linearmotors entweder beweglich oder feststehend ausgeführt werden - je nachdem, was bei einer konkreten Anwendung konstruktiv erforderlich ist.

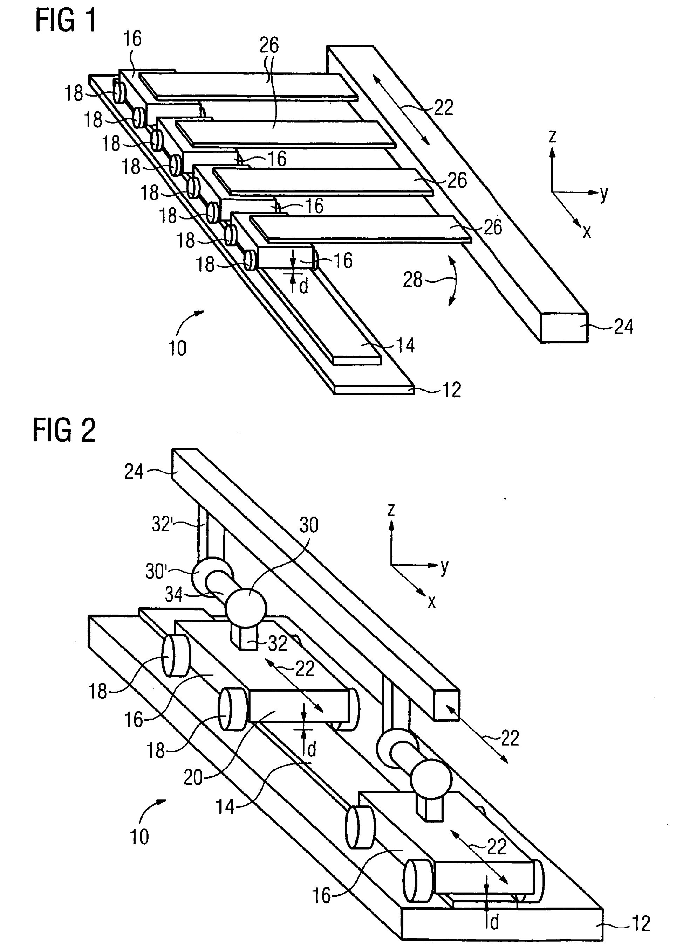

Bei den im Folgenden unter Bezug auf die FIG 1 bis 3 beschriebenen Ausführungsformen ist davon ausgegangen, dass bei dem elektrischen Linearmotor das Sekundärteil feststehend und das Primärteil bzw. eine Mehrzahl von Primärteilen beweglich ist/sind. Das Sekundärteil entspricht somit dem Ständer, während eine Mehrzahl von Primärteilen eine Läufereinheit bildet.

In den FIG ist das Sekundärteil mit 10 bezeichnet und weist eine Stahlplatte 12 auf, auf der eine Magnetspur 14, also eine Permanentmagnetreihe mit wechselnder Polarität (Nord-Süd-Nord- etc.), angebracht ist. Die Stahlplatte 12 dient dem magnetischen Rückschluss. Relativ zu dem Sekundärteil 10 kann sich eine Mehrzahl von Primärteilen 16 bewegen. Nicht gezeigt sind die Spulen der Primärteile 16. An den Primärteilen 16 sind Stützrollen 18 angebracht, die es ermöglichen, dass die Primärteile 16 auf der Stahlplatte 12 rollen können. Der eigentliche Primärteilkörper 20, an dem die Stützrollen 18 befestigt sind, wird wegen des Vorhandenseins der Stützrollen 18 in einem vorbestimmten Abstand d zu der Magnetspur 14 gehalten, während sich das Primärteil 16 in die durch die Pfeile 22 angegebenen Richtungen bewegt. In einer Maschine bewegen sich die Primärteile 16 üblicherweise nicht ständig in dieselbe Richtung, sondern auch wieder in Gegenrichtung zurück.

Es geht nun darum, ein bewegliches Teil 24 durch den Direktantrieb, also durch das Zusammenwirken von Sekundärteil 10 und Primärteilen 16, zu bewegen. Hierzu wird das bewegliche Teil 24 mit den Primärteilen 16 gekoppelt. Vorliegend ist keine starre Verbindung wie im Stand der Technik vorgesehen, sondern eine flexible Verbindung, die es ermöglicht, dass sich das bewegliche Teil 24, welches in den FIG 1 und 2 als Linearschlitten dargestellt ist, in solchen Richtungen bewegen kann, die von den Bewegungsrichtungen gemäß dem Doppelpfeil 22 verschieden sind. Bewegen sich die Primärteile 16 und damit auch das bewegliche Teil 24 längs der x-Achse, ist eine Relativbewegung des beweglichen Teils 24 zu den Primärteilen 16 in y- und z-Achse ermöglicht.

Bei der Ausführungsform gemäß FIG 1 ist dies wegen der Kopplung des beweglichen Teils 24 mit den Primärteilen 16 über streifenförmige Metallelemente 26 ermöglicht, die entsprechend dem Pfeil 28 verbiegbar sind. Bei der Ausführungsform gemäß FIG 2 umfasst die Koppeleinrichtung zwei Kugelgelenke 30 und 30', wobei das Kugelgelenk 30 über eine starre Verbindung 32 mit dem Primärteil 16 verbunden ist und das Kugelgelenk 30' ebenfalls über eine starre Verbindung 32' mit dem beweglichen Teil 24 verbunden ist. In die Kugelgelenke greift eine Verbindungsstange 34 ein, welche starr ist. Da die Verbindungsstange 34 starr ist, ist keine Relativbewegung in x-Richtung, also entsprechend den Pfeilen 22, zwischen beweglichem Teil 24 und Primärteilen 16 möglich, so dass die Antriebskraft optimal von den Primärteilen 16 auf das bewegliche Teil 24 übertragen wird. Hingegen kann sich das bewegliche Teil 24 in y- und z-Richtung relativ zu den Primärteilen bewegen und hierbei beispielsweise Unebenheiten in der Lagerung oder auch Unwuchten ausgleichen. An die Lagerung des beweglichen Teils 24 müssen daher nicht so hohe Anforderungen gestellt werden. Insbesondere muss die Lagerung des beweglichen Teils 24 nicht unmittelbar die Größe d des Luftspalts einstellen. Vielmehr gibt es im Betrieb eine magnetische Anziehungskraft zwischen der Magnetspur 14 und dem Körper 20 des Magnetteils 16, so dass die Stützrollen 18 auf jeden Fall auf der Stahlplatte 12 entlangrollen und der Luftspalt definiert die Größe d hat. Der Luftspalt wird somit weder kleiner noch größer, ohne dass die Lagerung des beweglichen Teils 24 diesen Luftspalt d festlegen müsste.

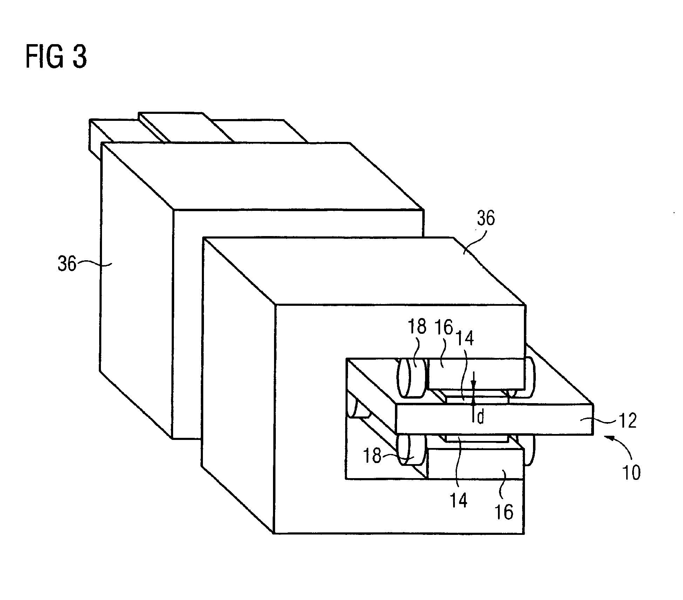

Die Ausführungsform aus FIG 2 ist insbesondere in symmetrischer Anordnung verwirklichbar. Eine solche Anordnung ist in FIG 3 gezeigt. Das Sekundärteil 10 ist hierbei symmetrisch ausgebildet, d. h. dass sich auf der Stahlplatte 12 an entgegengesetzten Seiten Magnetspuren 14 befinden, und an den entgegengesetzten Seiten fahren jeweils Primärteile 16 entlang. Es soll auch bei der Ausführungsform gemäß FIG 3 die Verbindung zu dem beweglichen Teil 24 in der in FIG 2 dargestellten Art gewährleistet sein. Vorliegend sollen die beweglichen Teile 24 der in FIG 3 oberen Läufereinheit einerseits und der in FIG 3 gezeigten unteren Läufereinheit andererseits mit einem U-förmigen Körper 36 verbunden sein, der seinerseits starr ist, so dass die beweglichen Teile 24 miteinander starr verbunden sind. Eine Relativbewegung des einen beweglichen Teils 24 zum jeweiligen Primärteil 16 hat somit unmittelbar eine Relativbewegung des anderen beweglichen Teils 24 zum jeweiligen Primärteil 16 zur Folge. Die Anordnung aus FIG 3 bewirkt deswegen symmetrische Kraftwirkungen auf die oberen und unteren Primärteile 16 und damit auf die Stützräder 18 oben und unten. Dadurch wird die gesamte Anordnung besonders stabil. Die Stützräder 18 sind bei der symmetrischen Ausführungsform gemäß FIG 3 jeweils weniger belastet, als wenn nur an einer Seite Primärteile 16 mit Stützrädern 18 über die Stahlplatte 12 fahren würden.

Durch das Zusammenwirken von flexibler Koppeleinrichtung mit den Kugelgelenken 30, 30', den starren Verbindungen 32, 32' und der Verbindungsstange 34 einerseits und den Stützrollen 18, welche die Funktion einer Abstandshaltevorrichtung haben, ist es möglich, dass in einer durch den Direktantrieb anzutreibenden Maschine ein bewegliches Teil gegenüber einem unbeweglichen Teil flexibel gelagert wird. An die Lagerung entstehen nicht so hohe Anforderungen, wie sie im Stand der Technik gestellt sind, um den Luftspalt d genau einzustellen.

Bei einem Aspekt der Erfindung ist es auch möglich, die Funktion von Primärteil und Sekundärteil gegenüber dem oben Beschriebenen umzukehren. Es ist also auch möglich, dass die flexible Kopplung zwischen dem Ständer oder einer Ständereinheit der Maschine und einem unbeweglichen Teil der Maschine erfolgt, gegenüber dem ein bewegliches Teil der Maschine gelagert ist.

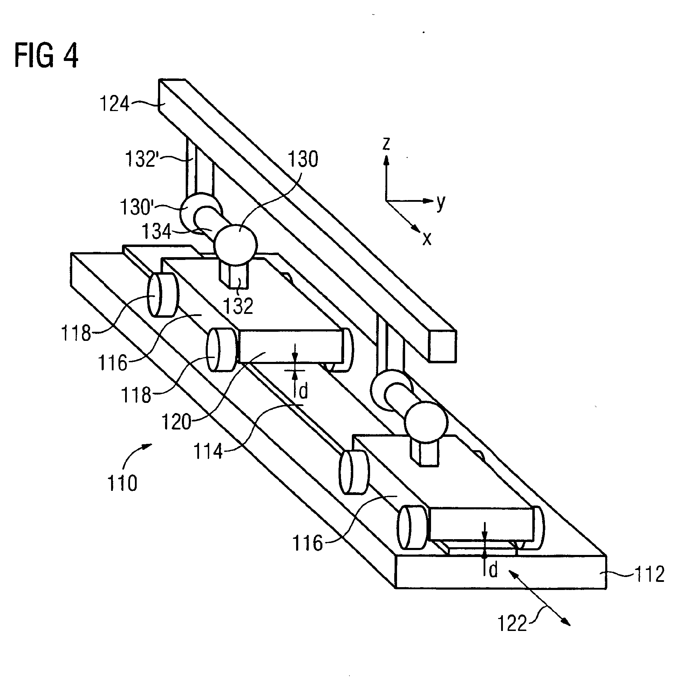

Diese Umkehr ist anhand FIG 4 veranschaulicht. FIG 4 zeigt dieselben Bauteile wie FIG 3 mit geänderter Funktion, weswegen dieselben Bauteile mit um die Zahl 100 erhöhten Bezugszahlen bezeichnet sind.

Anstatt, das sich die Primärteile 16 nun bewegen und Teil einer Läufereinheit sind, ist bei dieser Ausführungsform das Sekundärteil 10 der Läufer, und die Primärteile 16 bilden eine Ständereinheit. Der Unterschied ist durch die Platzierung des Pfeils 122 im Bereich des Läufers 110 veranschaulicht. Insbesondere ist das Bauteil 124 anders als das Bauteil 24 aus FIG 2 kein bewegliches Bauteil, sondern ist ein unbewegliches Bauteil der Maschine. Der Läufer 10 hingegen ist mit einem in FIG 4 nicht gezeigten beweglichen Bauteil der Maschine verbunden.

Der Läufer 10 rollt in Richtung des Doppelpfeils 122 hin und zurück an der Ständereinheit mit den Primärteilen 16 vorbei, wobei sich die Stützrollen 18 drehen.

## Patentansprüche

1. Maschine mit einem beweglichen Teil (24) und mit einem Direktantrieb (10,16) zum Bewegen des beweglichen Teils (24), wobei der Direktantrieb einen Ständer (10) und eine Läufereinheit (16) umfasst, wobei die Läufereinheit (16) über eine Koppeleinrichtung (26;30,30',32,32',34) mit dem beweglichen Teil (24) gekoppelt ist, welche eine Relativbewegung des beweglichen Teils (24) zu der Läufereinheit (16) ermöglicht, und wobei der Direktantrieb eine Abstandshaltevorrichtung (18) zum Halten eines Abstands (d) zwischen einem Wirkbereich (14) des Ständers (10) und einem Wirkbereich (20) der Läufereinheit (16) umfasst, wobei die Abstandshaltevorrichtung (18) hierbei gewährleistet, dass die Läufereinheit (16) einer durch die Magnetfelder hervorgerufenen anziehenden Kraft soweit folgt, bis die Abstandshaltevorrichtung (18) eine weitere Anziehung zwischen Ständer (10) und Läufereinheit (16) unterbindet.

2. Maschine nach Anspruch 1, **dadurch gekennzeichnet, dass** die Abstandshaltevorrichtung an der Läufereinheit bzw. einem Segment (16) der Läufereinheit angebrachte Stützrollen (18) umfasst.

3. Maschine nach Anspruch 1, **dadurch gekennzeichnet, dass** die Abstandshaltevorrichtung zumindest eine an dem Ständer angebrachte Schiene und zumindest einen an der Läufereinheit bzw. einem Segment der Läufereinheit angebrachten Führungsschuh umfasst.

4. Maschine nach einem der vorherigen Ansprüche, **dadurch gekennzeichnet, dass** die Koppeleinrichtung (26;30,30',32,32',34) eine Relativbewegung nur in eine oder mehrere solcher Richtung(en) ermöglicht, die von der Bewegungsrichtung der Läufereinheit verschieden ist bzw. sind.

5. Maschine nach einem der vorherigen Ansprüche, **dadurch gekennzeichnet, dass** die Koppeleinrichtung zumindest ein flaches streifenförmiges Metallelement (26) umfasst.

6. Maschine nach einem der vorherigen Ansprüche, **dadurch gekennzeichnet, dass** die Koppeleinrichtung zumindest ein Gelenk (30,30') und bevorzugt zumindest ein Kugelgelenk aufweist.

7. Maschine nach einem der vorherigen Ansprüche, **da**- **durch gekennzeichnet**, dass der Direktantrieb als elektrischer Linearmotor (10,16) ausgebildet ist.

8. Maschine nach Anspruch 7, **dadurch gekennzeichnet, dass** der Ständer (10) ein sich geradlinig erstreckendes Element (12) aufweist, wobei an einander entgegengesetzten Seiten des sich geradlinig erstreckenden Elements (12) jeweils eine Läufereinheit bereitgestellt ist, wobei die beiden Läufereinheiten jeweils mit einem beweglichen Teil (24) gekoppelt sind und die beweglichen Teile (24) starr miteinander verbunden (36) sind.

9. Maschine mit einem unbeweglichen Teil (124) und einem gegenüber dem unbeweglichen Teil beweglichen Teil, und mit einem Direktantrieb (110,116) zum Bewegen des beweglichen Teils, wobei der Direktantrieb eine Ständereinheit (16) und einen Läufer (10) umfasst, wobei die Ständereinheit (110) über eine Koppeleinrichtung (130,130',132,132',134) mit dem unbeweglichen Teil (124) gekoppelt ist, welche eine Relativbewegung des unbeweglichen Teils (124) zu der Ständereinheit (116) ermöglicht, und dass der Direktantrieb eine Abstandshaltevorrichtung (18) zum Halten eines Abstands (d) zwischen einem Wirkbereich (114) des Läufers (10) und einem Wirkbereich (120) der Ständereinheit (116) umfasst, **dadurch gekennzeichnet, dass** die Abstandshaltevorrichtung (18) hierbei gewährleistet, dass die Ständereinheit (116) einer durch die Magnetfelder hervorgerufenen anziehenden Kraft soweit folgt, bis die Abstandshaltevorrichtung (18) eine weitere Anziehung zwischen Läufer (10) und Ständereinheit (116) unterbindet.

10. Maschine nach Anspruch 9, **dadurch gekenn**- **zeichnet**, dass der Direktantrieb als elektrischer Linearmotor (110,116) ausgebildet ist, und dass der Läufer (10) ein sich geradlinig erstreckendes Element (112) aufweist, wobei an einander entgegengesetzten Seiten des sich geradlinig erstreckenden Elements (112) jeweils eine Ständereinheit bereitgestellt ist, wobei die beiden Ständereinheiten jeweils mit einem unbeweglichen Teil (124) gekoppelt sind und die unbeweglichen Teile (124) starr miteinander verbunden (136) sind.

## Claims

1. Machine having a moving part (24) and having a direct drive (10, 16) for moving the moving part (24), the direct drive comprising a stator (10) and an armature unit (16), the armature unit (16) being coupled by means of a coupling device (26; 30, 30', 32, 32', 34) to the moving part (24) which enables a relative movement of the moving part (24) with respect to the armature unit (16), and the direct drive including a spacer device (18) for maintaining a distance (d) between an active region (14) of the stator (10) and an active region (20) of the armature unit (16), the spacer device (18) at the same time ensuring that the armature unit (16) follows an attractive force, which is produced by the magnetic fields, until the spacer device (18) prevents a further attraction between stator (10) and armature unit (16).

2. Machine according to Claim 1, **characterized in that** the spacer device includes supporting rollers (18) attached to the armature unit or to a segment (16) of the armature unit.

3. Machine according to Claim 1, **characterized in that** the spacer device includes at least one rail attached to the stator and at least one guide shoe attached to the armature unit or to a segment of the armature unit.

4. Machine according to one of the preceding claims, **characterized in that** the coupling device (26; 30, 30', 32, 32', 34) enables a relative movement only in one or more such direction(s) which is/are different from the direction of motion of the armature unit.

5. Machine according to one of the preceding claims, **characterized in that** the coupling device includes at least one flat strip-shaped metal element (26).

6. Machine according to one of the preceding claims, **characterized in that** the coupling device has at least one joint (30, 30') and preferably at least one ball joint.

7. Machine according to one of the preceding claims, **characterized in that** the direct drive is designed in the form of an electric linear motor (10, 16).

8. Machine according to Claim 7, **characterized in that** the stator (10) has an element (12) which extends in a straight line, in each case an armature unit being provided on opposite sides of the element (12) which extends in a straight line, the two armature units each being coupled to a moving part (24) and the moving parts (24) being rigidly connected to one another (36).

9. Machine having a non-moving part (124) and a moving part opposite the non-moving part, and having a direct drive (110, 116) for moving the moving part, the direct drive comprising a stator unit (16) and an armature (10), the stator unit (110) being coupled by means of a coupling device (130, 130', 132, 132', 134) to the non-moving part (124) which enables a relative movement of the non-moving part (124) with respect to the stator unit (116), and the direct drive including a spacer device (18) for maintaining a distance (d) between an active region (114) of the armature (10) and an active region (120) of the stator unit (116), **characterized in that** the spacer device (18) at the same time ensures that the stator unit (116) follows an attractive force, which is produced by the magnetic fields, until the spacer device (18) prevents a further attraction between armature (10) and stator unit (116).

10. Machine according to Claim 9, **characterized in that** the direct drive is designed in the form of an electric linear motor (110, 116), and that the armature (10) has an element (112) which extends in a straight line, in each case a stator unit being provided on opposite sides of the element (112) which extends in a straight line, the two stator units each being coupled to a non-moving part (124) and the non-moving parts (124) being rigidly connected to one another (136).

## Revendications

1. Machine ayant une partie ( 24 ) mobile et un entraînement ( 10, 16 ) direct pour entraîner la partie ( 24 ) mobile, l'entraînement direct comprenant un stator ( 10 ) et un groupe ( 16 ) rotorique, le groupe ( 16 ) rotorique étant accouplé à la partie ( 24 ) mobile par un dispositif ( 26; 30, 30', 32, 32', 34 ) d'accouplement, qui rend possible un mouvement relatif de la partie ( 24 ) mobile par rapport au groupe ( 16 ) rotorique, et dans laquelle l'entraînement direct comprend un dispositif ( 18 ) de maintien de distance pour maintenir une distance ( d ) entre une zone ( 14 ) active du stator ( 10 ) et une zone ( 20 ) active du groupe ( 16 ) rotorique, le dispositif ( 18 ) de maintien à distance donnant ainsi l'assurance que le groupe ( 16 ) rotorique suit une force d'attraction provoquée par les champs magnétiques jusqu'à ce que le dispositif ( 18 ) de maintien à distance interdise une attraction supplémentaire entre le stator ( 10 ) et le groupe ( 16 ) rotorique.

2. Machine suivant la revendication 1, **caractérisée en ce que** le dispositif de maintien à distance comprend des galets ( 18 ) d'appui mis sur le groupe rotorique ou sur un segment ( 16 ) du groupe rotorique.

3. Machine suivant la revendication 1, **caractérisée en ce que** le dispositif de maintien à distance comprend au moins un rail mis sur le stator et au moins un sabot de guidage mis sur le groupe rotorique ou sur un segment du groupe rotorique.

4. Machine suivant l'une des revendications précédentes, **caractérisée en ce que** le dispositif ( 26; 30, 30', 32, 32', 34 ) d'accouplement rend possible un mouvement relatif seulement dans une ou dans plusieurs directions, qui est ou qui sont différente ( s ) de la direction de déplacement du groupe rotorique.

5. Machine suivant l'une des revendications précédentes, **caractérisée en ce que** le dispositif d'accouplement comprend au moins un élément ( 26 ) métallique plat en forme de bande.

6. Machine suivant l'une des revendications précédentes, **caractérisée en ce que** le dispositif d'accouplement a au moins une articulation ( 30, 30' ) et, de préférence, au moins une rotule.

7. Machine suivant l'une des revendications précédentes, **caractérisée en ce que** l'entraînement direct est constitué sous la forme d'un moteur ( 10, 16 ) électrique linéaire.

8. Machine suivant la revendication 7, **caractérisée en ce que** le stator ( 10 ) a un élément ( 12 ) s'étendant en ligne droite, un groupe rotorique respectif étant mis à disposition sur des côtés opposés l'un à l'autre de l'élément ( 12 ) s'étendant en ligne droite, les deux groupes rotoriques étant accouplés respectivement à une partie ( 24 ) mobile et les parties ( 24 ) mobiles étant assemblées ( 36 ) rigidement entre elles.

9. Machine ayant une partie ( 124 ) immobile et une partie mobile par rapport à la partie immobile et ayant un entraînement ( 110, 116 ) direct pour le déplacement de la partie mobile, l'entraînement direct comprenant un groupe
( 16 ) statorique et un rotor ( 10 ), le groupe ( 110 ) statorique étant accouplé à la partie ( 124 ) immobile par un dispositif ( 130, 130', 132, 132', 134 ) d'accouplement, qui rend possible un mouvement relatif de la partie ( 124 ) immobile par rapport au groupe ( 116 ) statorique, et en ce que l'entraînement direct comprend un dispositif ( 18 ) de maintien à distance pour le maintien d'une distance ( d ) entre une zone ( 114 ) active du rotor ( 10 ) et une zone ( 120 ) active du groupe ( 116 ) statorique, **caractérisée en ce que** le dispositif ( 18 ) de maintien à distance assure que le groupe ( 116 ) statorique suive une force d'attraction provoquée par les champs magnétiques jusqu'à ce que le dispositif ( 18 ) de maintien à distance interdise une attraction supplémentaire entre le rotor ( 10 ) et le groupe ( 116 ) statorique.

10. Machine suivant la revendication 9, **caractérisée en ce que** l'entraînement direct est constitué sous la forme d'un moteur ( 110, 116 ) électrique linéaire et **en ce que** le rotor ( 10 ) a un élément ( 112 ) s'étendant en ligne droite, respectivement un groupe statorique étant mis à disposition sur des côtés opposés l'un à l'autre de l'élément ( 112 ) s'étendant en ligne droite, les deux groupes statorique étant accouplés respectivement à une partie ( 124 ) immobile et les parties ( 124 ) immobiles étant assemblées ( 136 ) rigidement entre elles.
